**Europäisches Patentamt**

(19) **European Patent Office**

**Office européen des brevets**

(11) Veröffentlichungsnummer: **0 147 816**
**B1**

(12) **EUROPÄISCHE PATENTSCHRIFT**

(45) Veröffentlichungstag der Patentschrift:
01.03.89

(51) Int. Cl.⁴: **B 23 D 19/08**

(21) Anmeldenummer: **84116033.6**

(22) Anmeldetag: **21.12.84**

(54) Schere, insbesondere Kreismesserschere.

(30) Priorität: **04.01.84 DE 3400122**

(43) Veröffentlichungstag der Anmeldung:
**10.07.85 Patentblatt 85/28**

(45) Bekanntmachung des Hinweises auf die Patenterteilung:
**01.03.89 Patentblatt 89/9**

(84) Benannte Vertragsstaaten:
**AT BE DE FR GB IT**

(56) Entgegenhaltungen:
**DE-A- 1 959 596**
**DE-B- 2 314 730**
**DE-C- 1 040 881**
**US-A- 2 439 794**

(73) Patentinhaber: **Umlauf, Norbert, Haferkamp 64,
D-5800 Hagen (DE)**

(72) Erfinder: **Oberländer, Karol Henryk, Hauptstrasse 67,
D-8653 Mainleus (DE)**
Erfinder: **Umlauf, Norbert, Haferkamp 64, D-5800 Hagen
(DE)**

(74) Vertreter: **Bergen, Klaus, Dipl.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1 (DE)**

ACTORUM AG

**Beschreibung**

Die Erfindung betrifft eine Schere zum Ausschneiden von Segmenten und Streifen aus Metallbändern mittels eines in das Band einfahrenden Führungsblockes, der einen Messerträger für ein Messerpaar aufweist, insbesondere aus einem oberen und einem unteren Kreismesser, und eines das Messerpaar auf einer Kurve bewegenden Schwenkantriebs.

Zum ununterbrochenen Betrieb von Metallband-Behandlungsanlagen müssen die Bänder endlos zugeführt werden. Das läßt sich erreichen, indem das Bandende eines durch die Bandbehandlungsanlage geführten Bandes mit dem Anfang eines neuen Bandes entweder mittels Stumpfschweißen bei dicken oder Überlappungsschweißen bei dünneren Bändern verbunden wird. Beim Verbinden von Bändern unterschiedlicher Breite oder bei einem Bandversatz lassen sich im Bereich der Schweiß- oder Heftnaht nachteilige, seitliche Überstände bzw. Ecken nicht vermeiden, die beispielsweise Kunststoffbeschichtungen und sonstige Beläge von Bandführungs- und Antriebsrollen beschädigen sowie damit in Berührung kommende Maschinenteile, Ofenauskleidungen und auch Beschichtungen in chemischen Bädern gefährden. Hinzu kommt, daß Metallband-Behandlungsanlagen mit relativ hohen spezifischen Zügen und erheblichen Geschwindigkeiten betrieben werden, so daß oftmals schon ein kleiner Bandanriß zum Zerreißen des Metallbandes führt und somit aufwendige Störungen und Defekte verursacht; die Bereiche mit Bandanrissen müssen deshalb aus dem Band entfernt werden.

Eine Schere der eingangs genannten Art ist aus der US-A-2 439 794 bekannt. Diese bekannte Schere ist konstruktiv außerordentlich aufwendig, beansprucht sehr viel Platz und benötigt zahlreiche Bauteile. Sie besteht aus einem sichel- bzw. halbmondartigen, in Stützträgern ein oberes und ein unteres Kreismesser aufnehmenden Messerträger. Der Messerträger lagert in einem über einen vertikalen Bolzen auf einer querbewegbaren Trägerplatte angeordneten Rahmen. Mittels der Trägerplatte läßt sich der Messerträger mit den Kreismessern mehr oder weniger weit in das Metallband einfahren, was durch die Halbmondform des Messerträgers unterstützt wird. Die Trägerplatte lagert ihrerseits auf einem Rahmen, der mittels Rädern auf Schienen in Längsrichtung des Metallbandes verfahren wird, und zwar dann, wenn die angetriebenen Kreismesser in das Metallband eingreifen. Es entsteht dann nämlich eine den Rahmen verfahrende bzw. mitnehmende Reaktionskraft. Die Kreismesser werden von einem Motor mittels Riemen und zwischengeschalteten Schneckengetrieben über eine Antriebswelle angetrieben. Zum Verschwenken des Rahmens und somit des Messerträgers um den Drehzapfen muß hingegen eine Bedienungsperson, die auf einem Sitz während des Scherbetriebes zusammen mit dem Rahmen verfährt, ein Handrad betätigen.

Bei Anlagen zum Behandeln von dickeren Bändern ist es bekannt, hinter der Schweißmaschine entweder Ausklinkstanzen oder Brenner einzusetzen, um diese Bereiche des Bandes zu entfernen. Die Stanzen sind hier deshalb nachteilig, weil sie aufgrund der benötigten großen Kräfte und ihrer schweren, platzaufwendigen Bauweise nicht nur teuer, sondern zudem auch noch wartungsintensiv sind. Der große Platzbedarf erlaubt es meist nicht, bestehende Anlagen nachzurüsten. Das von Zeit zu Zeit erforderliche Nachschleifen der kreisförmigen Stanzmesser ist zudem sehr aufwendig und erfordert insbesondere dann Spezial-Schleifmaschinen, wenn Spiralmesser nachgeschliffen werden müssen, was zudem nur satzweise möglich ist.

Weiterhin ist es bekannt, die Bandausschnitte bei dünneren Bändern mit sogenannten Knabberscheren vom Bedienungspersonal ausführen zu lassen. Diese Lösung ist einerseits unfallträchtig und andererseits zeitaufwendig, da die Bandausschnitte auf beiden Seiten erforderlich sind. Beim Festlegen bzw. Berechnen der für einen Bundwechsel benötigten Zeit, addieren sich die Zeiten für das Ausklinken, d.h. Ausschneiden der Bandsegmente, und die Zeit für das Schweißen, da sich das Ausschneiden dem Schweißen anschließt.

Der Erfindung liegt die Aufgabe zugrunde, eine die vorgenannten Nachteile vermeidende, einfache, preiswerte, betriebssichere und platzsparende Schere zum Entfernen von überstehenden Ecken und/oder Bandanrissen zu schaffen und dabei Bandsegmente, Bandstreifen oder Bandkurvenstreifen auszuschneiden.

Diese Aufgabe wird für eine Schere der eingangs erwähnten Art erfindungsgemäß durch einen Schwenkantrieb gelöst, der einen in einer Ausnehmung des Führungsblockes lagernden, vertikalen Lagerzapfen des Messerträgers und einen auf dem Führungsblock angeflanschten, mit einer Antriebswelle von oben in den Zapfen eingreifenden Motor aufweist. Beim Verschwenken des Messerpaares je einer an jeder Seite des Bandes angeordneten Schere lassen sich vom Kurvenverlauf bestimmte Bandsegmente und damit im Bereich der Schweißnähte vorhandene überstehende Ecken und Kanten oder Bandanrisse im Randbereich des die Behandlungsanlage durchlaufenden Bandes ausschneiden. Damit läßt sich der Antriebsmotor oben, d.h. vertikal auf dem Führungsblock anordnen. Der Vertikalmotor benötigt keinen Platz seitlich neben dem Scherengerüst; er füllt lediglich ansonsten ohnehin nicht genutzten, zur freien Verfügung stehenden Raum oberhalb des Bandlaufs bzw. des Bandes aus. Der Vertikalmotor befindet sich immer am Ort des Geschehens, d.h. zusammen mit dem Messerträger oberhalb des Blechbandes, unabhängig davon, wie weit der Führungsblock quer zur Bandlaufrichtung, d.h. mit mehr oder weniger großem Abstand von der Bandkante, verstellt wird, womit sich die Breite des Ausschnitts festlegen läßt. Beim Verstellen machen der mit dem Block verbundene Motor und der Messerträger die Anstellbewegung bis in die endgültige Betriebsposition mit. Danach verschwenkt beim Inbetriebsetzen des Motors nur noch der Messerträger aus der Ausgangslage auf einem Kreisbogen von 180° bis in eine gegenüberliegende Endlage, und wieder zurück.

Um darüber hinaus auch noch den Schwenkradius des Messergehäuses mit dem darin angeordneten Messerpaar zu variieren, kann der Lagerzapfen in einem zum Führungsblock des Scherenrahmens drehbar gelagerten Block des Messerträgers angeordnet und der Messerträger relativ zu den Blöcken linear beweglich sein. Damit lassen sich der Schwenkpunkt bzw. die Kurvenbahn des Messerträgers unabhängig von einem Anstellen der Blöcke verändern und gegebenenfalls ein wellenförmiger Verlauf des ausgeschnittenen Bandstreifens erreichen.

Die Messer können antriebslos, oder zumindest ein Messer angetrieben sein. Vorzugsweise sind die Schnittgeschwindigkeiten der Messer und die Schwenkgeschwindigkeit des Messerträgers aufeinander abgestimmt. Neben dem Schneiden mittels angetriebener Messer läßt sich das Band auch durch das Schwenken des Messerkopfes, und kombiniert durchführen, d.h. ein angetriebenes Kreismesser wird beim Schnitt durch das Schwenken des Messerkopfes unterstützt. Der Schwenkantrieb leitet bei antriebslosen Messern die volle Schnittleistung ein bzw. erhöht eine möglicherweise nicht ausreichende Schnittleistung angetriebener Messer. Insbesondere bei Messern, die das Band nicht durchschneiden, was zu einem Durchdrehen oder einem Stillstand der Messer führen kann, wirkt sich die Schnittunterstützung durch den Schwenkantrieb besonders vorteilhaft aus. Der kombinierte Betrieb mit sich überlagernden Schnittleistungen ermöglicht das Schneiden selbst dicker Bänder mit relativ kleinen Messerdurchmessern. Die Schnittkraft bleibt sehr gering. Die Schere läßt sich weiterhin auch dann vorteilhaft betreiben, wenn wahlweise das untere oder das obere Messer gerade, d.h. mit einer geraden Schneidkante ausgebildet wird.

Zum Besäumen eines Blechbandes wird der Messerträger in einer Position mit parallel zur Längsachse des Metallbandes schneidenden Messern festgelegt. Der Messerträger wird hierbei aus seiner Ausgangsstellung lediglich um 90° verschwenkt und dann verriegelt; in dieser Position rotieren die Messer parallel zur Bandlaufrichtung. Die Schere läßt sich hierbei zum Besäumen, d.h. zum Entfernen von insbesondere am Bandanfang und -ende häufig beschädigten Bandkanten einsetzen. Nach dem Besäumen kann der Messerträger entweder in die Ausgangslage zurück- oder in die gegenüberliegende Endlage durchgeschwenkt werden.

Vorteilhaft läßt sich zumindest das innen schneidende, untere Messer kegelförmig ausbilden und auf einer Drehachse anbringen. Im Gegensatz zu Kreismessern, die einander in einer vertikalen Ebene gegenüberliegen, wird die Auflagefläche des Bandes noch während des Schneidens freigemacht, bzw. schon unmittelbar im Schnittpunkt verkleinert, wodurch sich saubere Schnittkanten erreichen und wellenförmige Kanten vermeiden lassen. Die Kegelform kann dabei durch entsprechendes Anschleifen der schmalen Stirnseite hergestellt werden und gegebenenfalls unterschiedliche Neigungen der geschliffenen Flanken aufweisen.

Über die Antriebswelle eines Messers, die in einer Exzenterbüchse gelagert ist, kann die Schnittiefe und mittels einer axial verschieblichen Antriebswelle der Spalt bzw. die Luft zwischen Ober- und Untermesser eingestellt werden.

Mit einem auf der axial verschieblichen Antriebswelle angeordneten Federpaket läßt sich ein etwaiges Spiel ausgleichen.

Die Erfindung wird nachfolgend anhand der in den Zeichnungen dargestellten Ausführungsbeispiele einer Kreismesserschere des näheren erläutert. Es zeigen:

Fig. 1 eine schematische, teilweise geschnittene Kreismesser-Schere, in einer Seitenansicht;

Fig. 2 den Gegenstand gemäß Fig. 1 entlang der Schnitt-Linie II–II;

Fig. 3 eine Draufsicht entlang der Schnitt-Linie III–III in Fig. 1;

Fig. 4 eine Schere mit einer zusätzlichen Vorrichtung zum Verstellen des Schwenkradius, in einer Seitenansicht und geschnitten, sowie

Fig. 5 den Gegenstand gemäß Fig. 4 entlang der Schnitt-Linie V–V.

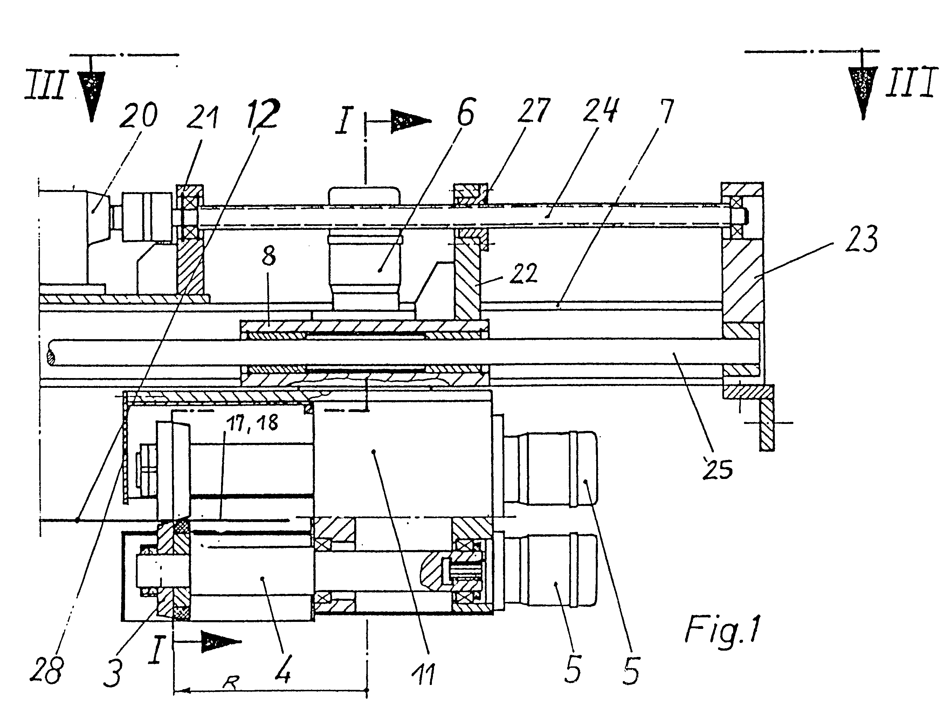

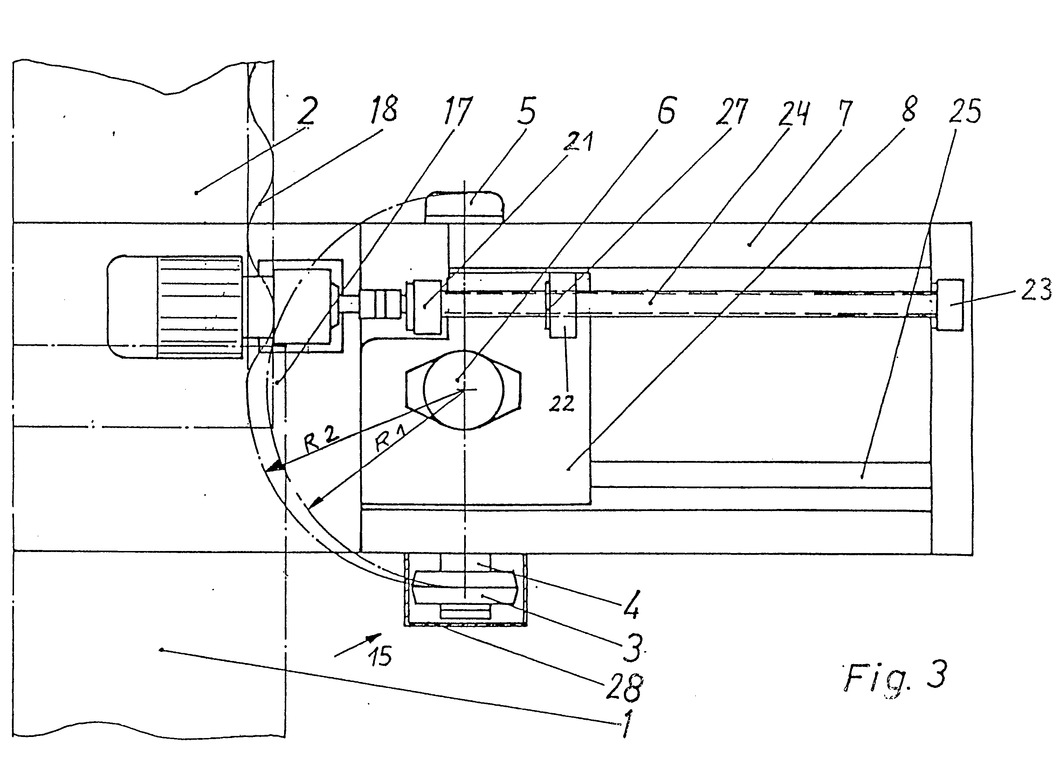

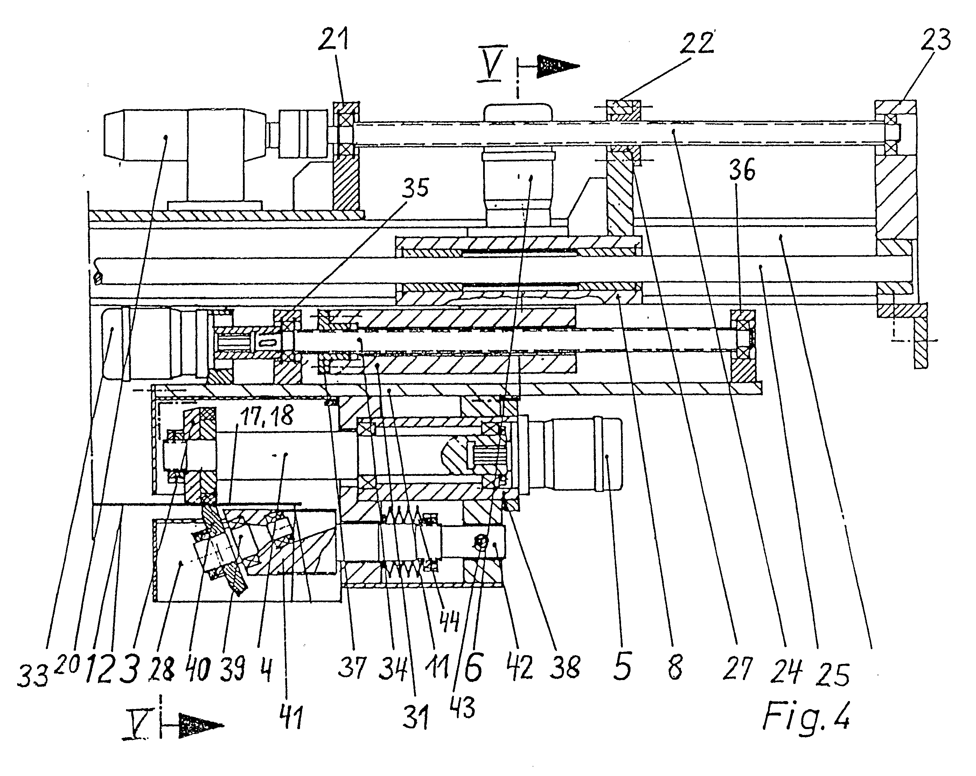

Ein Bandende eines eine nicht dargestellte Bandbehandlungsanlage durchlaufenden Bandes 1 und der Bandanfang des folgenden Bandes 2 sind gemäß Fig. 3 durch Überlappungsschweißen mittels einer nicht dargestellten Schweißvorrichtung miteinander verbunden. Zum Ausschneiden bzw. Besäumen der Ränder der Metallbänder 1, 2, insbesondere im Bereich der Schweißnaht, weist eine Schere zwei vertikal übereinander angeordnete Kreismesser 3 auf. Diese Kreismesser werden über Messerwellen 4 von Hydraulikmotoren 5 angetrieben. Die Kreismesser 3, von denen gemäß Fig. 1 beide und gemäß Fig. 4 lediglich das obere angetrieben werden, lassen sich mittels eines als Hydraulikmotor ausgeführten Schwenkantriebs 6 verstellen.

Der Schwenkmotor 6 ist hierzu auf einen linear beweglich, in einem Scherenrahmen 7 gelagerten Führungsblock 8 angeflanscht und greift mit einer Vielkeilwelle 9 in einen Lagerzapfen 10 eines die Kreismesser 3 und deren Wellen 4 einschließlich der Motoren 5 aufnehmenden Messerträgers 11 ein. Der Messerträger 11 wird einerseits mittels Lagern 12 an der Unterseite des Führungsblocks 8 und andererseits in einer Ausnehmung 13 des Blockes 8 mittels eines den Zapfen 10 aufnehmenden Lagers 14 drehbar geführt. Die Rotation der Vielkeilwelle 9 des Motors 6 überträgt sich vom Zapfen 10 auf den Messerträger 11, der hierbei aus der in Fig. 3 dargestellten Ausgangslage 15 auf einer Kurve entsprechend einem von R1 bis R2 variierenden Radius bis in eine gegenüberliegende Endlage 16 und danach wieder zurück in die Ausgangslage 15 verschwenkt wird. Hierbei wird vom Rand der miteinander verschweißten Metallbänder 1, 2 entweder ein Segment 17 oder ein wellenförmiger Kurvenstreifen 18 ausgeschnitten. Die Segmente bzw. Kurvenstreifen fallen in einen nicht dargestellten Schrottbehälter.

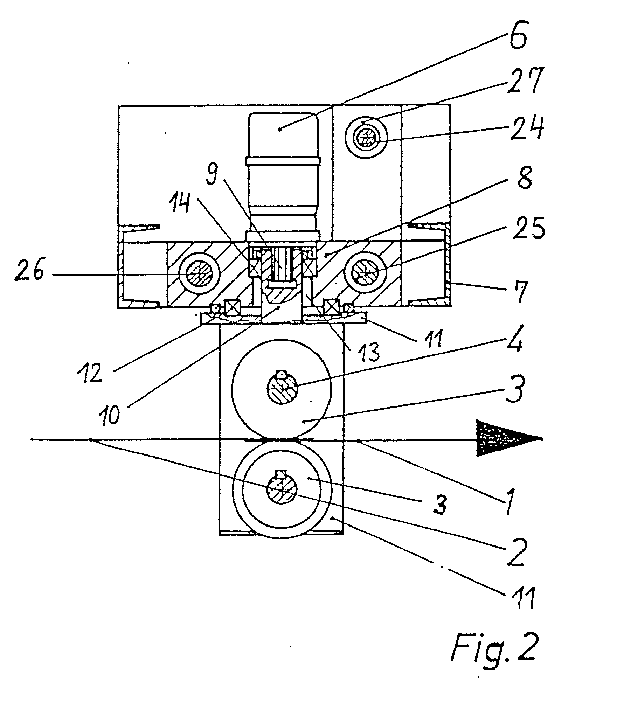

Vor dem Schwenken wird der Messerträger 11 auf die jeweilige Einfahrtiefe in das Metallband 1, 2, d.h. auf die gewünschte Breite des auszuschneidenden Segmentes 17 oder Kurvenstreifens eingestellt. Dazu ist im Scherenrahmen 7 ein Motor 20 angeordnet, der über eine in Lagerböcken 21, 22, 23 gelagerte Spindel 24 den auf Rundführungen 25, 26 (Fig. 2) verschieblichen Führungsblock 8 linear verstellt. Der mittlere Lagerbock 22 ist am Führungsblock 8 befestigt, wobei die Rotation der Spindel 24 von einer Spindelmutter 27 des mittleren Lagerbockes 22 in eine Linearbewegung des Führungsblockes 8 umgewandelt wird.

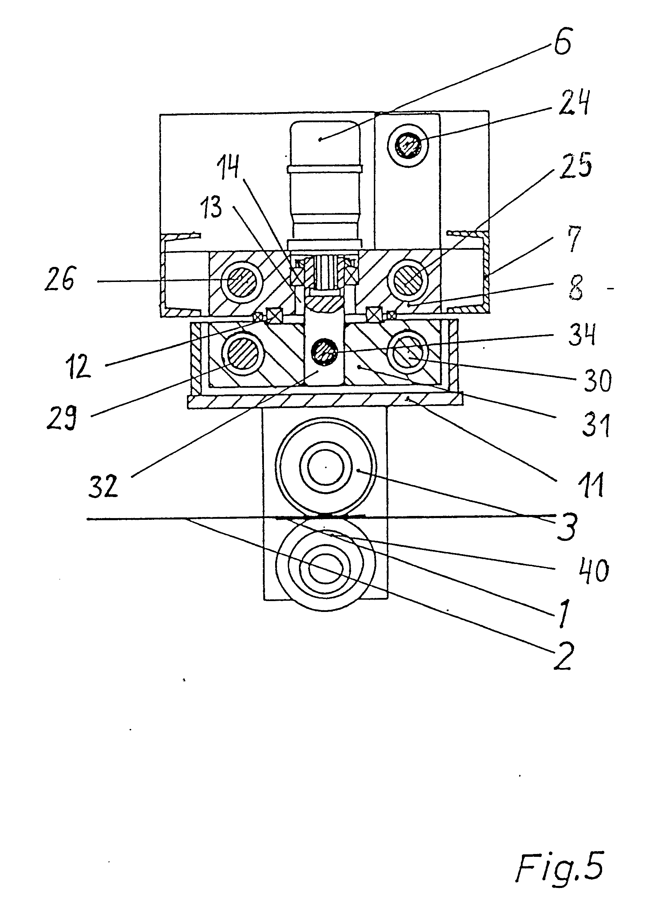

Zum zusätzlichen Verstellen des Radius für die Schwenkbewegung des Messerträgers 11 mit den darin angeordneten, von einer Schutzhaube 28 abgedeckten Kreismessern 3, befindet sich gemäß Fig. 4 und 5 unterhalb des Führungsblockes 8 ein auf Rundstäben 29, 30 geführter Block 31 des Messerträgers 11. Der Block 31 ragt mit einem Lagerzapfen 32 in die Ausnehmung 13 des Führungsblockes 8 hinein. Der Lagerzapfen 32 wird in der Ausnehmung 13 von dem Lager 14 aufgenommen, während das Lager 12 zwischen den Blöcken 8, 31 angeordnet ist. Im Betrieb verschwenkt der Motor 6 über die in den Lagerzapfen 32 eingreifende Vielkeilwelle 9 den unteren Block 31 und den damit verbundenen Messerträger 11.

Zum Einstellen unterschiedlicher Radien ist der Messerträger 11 relativ zu den Blöcken 8, 31 linear beweglich geführt. Das wird mit einem Motor 33 erreicht, der eine Spindel 34 antreibt, die den Lagerzapfen 32 durchdringt und in Lagerböcken 35, 36 des Messerträgers 11 lagert. Die Rotation der Spindel 34 wird von einer im Block 31 festgelegten Spindelmutter 37 über die Blöcke 35, 36 auf den Messerträger 11 als lineare Verstellbewegung übertragen.

Zum Einstellen der Schnittiefe der Kreismesser 3 ist die Messerwelle 4 des oberen Kreismessers in einer Exzenterbüchse 38 gelagert, die sich beispielsweise von einer Bedienungsperson oder motorisch verstellen läßt. (Fig. 4). Bei der in Fig. 4 dargestellten Ausführung der Schere ist das untere Messer 40 kegelförmig ausgebildet und auf einer ca. 20° geneigten Drehachse 39 angeordnet. Das kegelförmige Messer 40 lagert mit der geneigten Drehachse 39 in einem Lagerkopf 41, der in eine antriebslose, d.h. frei mitlaufende, im Messerträger 11 gelagerte Welle 42 übergeht. Die Welle 42 kann mittels einer Exzenterverstellung 43 axial verschoben und damit der Spalt bzw. die Luft zwischen den Messern 3, 40 eingestellt werden. Ein auf der Welle 42 angeordnetes Federpaket 44 aus Tellerfedern sorgt während des Einstellens für einen Spielausgleich, wobei das System immer zu einer Seite fest positioniert wird.

## Patentansprüche

1. Schere zum Ausschneiden von Segmenten und Streifen aus Metallbändern mittels eines in das Band (1, 2) eingreifenden Führungsblockes (8), der einen Messerträger (11) für ein Messerpaar aufweist, insbesondere aus einem oberen und einem unteren Kreismesser (3, 40), und eines das Messerpaar auf einer Kurve bewegenden Schwenkantriebs (6), gekennzeichnet durch einen Schwenkantrieb, der einen in einer Ausnehmung (13) des Führungsblockes (8) lagernden, vertikalen Lagerzapfen (10, 32) des Messerträgers (11) und einen auf dem Führungsblock (8) angeflanschten, mit einer Antriebswelle (9) von oben in den Zapfen (10, 32) eingreifenden Motor (6) aufweist.

2. Schere nach Anspruch 1, dadurch gekennzeichnet, daß der Lagerzapfen (10) in einem zum Führungsblock (8) des Scherenrahmens (7) drehbar gelagerten Block (31) des Messerträgers (11) angeordnet und der Messerträger (11) relativ zu den Blöcken (8, 31) linear beweglich ist.

3. Schere nach einem der Ansprüche 1 oder 2, gekennzeichnet durch zumindest ein angetriebenes Messer (3; 40).

4. Schere nach einem oder mehreren der Ansprüche 1 bis 3, gekennzeichnet durch antriebslose Messer (3; 40).

5. Schere nach einem oder mehreren der Ansprüche 1 bis 4, dadurch gekennzeichnet, daß die Schnittgeschwindigkeit der Messer (3; 40) und die Schwenkgeschwindigkeit des Messerträgers (11) aufeinander abgestimmt sind.

6. Schere nach einem oder mehreren der Ansprüche 1 bis 5, dadurch gekennzeichnet, daß der Messerträger (11) in einer Position mit parallel zur Längsachse des Metallbandes (1, 2) schneidenden Messern festgelegt wird.

7. Schere nach einem oder mehreren der Ansprüche 1 bis 6, gekennzeichnet durch kegelförmige Messer (40).

8. Schere nach Anspruch 7, dadurch gekennzeichnet, daß das innen schneidende, untere Messer (40) kegelförmig ausgebildet ist.

9. Schere nach Anspruch 7 oder 8, gekennzeichnet durch eine geneigte Drehachse (39) des unteren Messers (40).

10. Schere nach einem oder mehreren der Ansprüche 1 bis 9, dadurch gekennzeichnet, daß die Messerwelle (4) eines Messers (3) in einer Exzenterbüchse (38) gelagert ist.

11. Schere nach einem oder mehreren der Ansprüche 1 bis 10, dadurch gekennzeichnet, daß ein Messer eine axial verschiebbare Welle (42) aufweist.

12. Schere nach einem oder mehreren der Ansprüche 1 bis 11, gekennzeichnet durch ein auf der axial verschieblichen Welle (42) angeordnetes Federpaket (44).

## Claims

1. Shears for cutting out segments and strips from metal sheets by means of a guide block (8) engaging in the sheet (1, 2) which has a knife carrier (11) for a pair of knives, in particular an upper and a lower circular knife (3, 40), and a swivel drive (6) moving the pair of knives on a curve, characterised by a swivel drive which includes a vertical bearing journal (10, 32) of the knife carrier (11) supported in a bearing in a recess (13) in the guide block (8) and a motor (6), flange connected to the guide block (8), having a drive shaft (9) engaging from above in the journal (10, 32).

2. Shears according to claim 1, characterised in that the bearing journal (10) is arranged in a block (31) of the knife carrier (11) rotatably mounted relative to the guide block (8) of the frame (7) of the shears and the knife carrier (11) can be moved linearly relative to the blocks (8, 31).

3. Shears according to claim 1 or claim 2, characterised by at least one driven knife (3; 40).

4. Shears according to any one or more of claims 1 to 3, characterised by non-driven knives (3; 40).

5. Shears according to any one or more of claims 1 to 4, characterised in that the cutting speed of the knives (3; 40) and the swivelling speed of the knife carrier (11) are adapted to one another.

6. Shears according to any one or more of claims 1 to 5, characterised in that the knife carrier (11) is fixed in a position with knives cutting parallel to the longitudinal axis of the metal sheet (1, 2).

7. Shears according to any one or more of claims 1 to 6, characterised by conical knives (40).

8. Shears according to claim 7, characterised in that the lower knife (40), cutting on the inside, is conical.

9. Shears according to claim 7 or claim 8, characterised by an inclined axis of rotation (39) of the lower knife (40).

10. Shears according to any one or more of claims 1 to 9, characterised in that the knife shaft (4) of a knife (3) is mounted in an eccentric bush (38).

11. Shears according to any one or more of claims 1 to 10, characterised in that one knife has an axially displaceable shaft (42).

12. Shears according to any one or more of claims 1 to 11, characterised by a spring assembly (44) arranged on the axially displaceable shaft (42).

**Revendications**

1. Cisaille pour le découpage de segments et de bandes dans des bandes métalliques au moyen d'un bloc de guidage (8) qui s'engage dans la bande (1, 2) et qui comporte un support de lames (11) pour une paire de lames constituée notamment par des lames circulaires (3, 40), l'une supérieure, l'autre inférieure, et d'un dispositif de pivotement (6) qui déplace la paire de lames sur une courbe, caractérisée en ce que le dispositif de pivotement comporte un pivot (10, 32) de support de lames (11), vertical, qui est monté sur paliers dans un évidement (13) du bloc de guidage (8) et un moteur (6), monté sur une bride du bloc de guidage (8), qui est engagé par en haut, par un arbre d'entraînement (9), dans le pivot (10, 32).

2. Cisaille selon la revendication 1, caractérisée en ce que le pivot (10) est placé dans un bloc (31) du support de lames monté de manière à pouvoir pivoter par rapport au bloc de guidage (8) du cadre (7) des lames et que le support de lames (11) peut se déplacer linéairement par rapport aux blocs (8, 11).

3. Cisaille selon l'une des revendications 1 ou 2, caractérisée en ce qu'elle comporte au moins une lame entraînée (3, 40).

4. Cisaille selon une ou plusieurs des revendications 1 à 3, caractérisée en ce qu'elle comporte des lames non entraînées (3, 40).

5. Cisaille selon une ou plusieurs des revendications 1 à 4, caractérisée en ce que la vitesse de coupe des lames (3, 40) et la vitesse de pivotement du support de lames (11) sont réglées l'une par rapport à l'autre.

6. Cisaille selon une ou plusieurs des revendications 1 à 5, caractérisée en ce que le support de lames (11) est fixé dans une position dans laquelle les lames coupantes sont parallèles à l'axe longitudinal de la bande métallique (1, 2).

7. Cisaille selon une ou plusieurs des revendications 1 à 6, caractérisée en ce qu'elle comporte des lames coniques (40).

8. Cisaille selon la revendication 7, caractérisée en ce que la lame inférieure (40) coupant à l'intérieur est conique.

9. Cisaille selon l'une des revendications 7 ou 8, caractérisée en ce que la lame inférieure (40) a un axe de rotation (39) incliné.

10. Cisaille selon une ou plusieurs des revendications 1 à 9, caractérisée en ce que l'arbre (14) de la lame (3) est monté sur paliers dans un boîtier d'excentrique (38).

11. Cisaille selon une ou plusieurs des revendications 1 à 10, caractérisée en ce que l'une des lames a un arbre (42) qui peut se déplacer dans le sens axial.

12. Cisaille selon une ou plusieurs des revendications 1 à 11, caractérisée en ce qu'elle comporte un paquet de ressorts (44) monté sur un arbre (42) qui peut se déplacer dans le sens axial.

Fig.1

EP 0 147 816 B1

Fig. 2

2 18 17 5 21 6 27 24 7 8 25 23

R2 R1

22

4

3

15 28

1

EP 0 147 816 B1

Fig. 3

Fig. 4

EP 0 147 816 B1

Fig.5